# EUROPÄISCHE PATENTSCHRIFT

(11) **EP 2 100 801 B1**
(45) Veröffentlichungstag und Bekanntmachung des Hinweises auf die Patenterteilung: **06.07.2011**
(21) Anmeldenummer: 09003233.5
(22) Anmeldetag: 05.03.2009
(51) Int. Cl.: B62D 33/02, B60P 7/135, B60P 7/08

(54) **Vorrichtung zur Sicherung der Ladung eines Nutzfahrzeugs, Verfahren zum Sichern von Ladung und Nutzfahrzeug mit einer derartigen Vorrichtung**
Device for securing the load of a commercial vehicle, method for securing a load and commercial vehicle with such a device
Dispositif de sécurisation du chargement d'un véhicule utilitaire, procédé de sécurisation du chargement et véhicule utilitaire doté d'un tel dispositif

(30) Priorität: 10.03.2008 DE 102008013329
(43) Veröffentlichungstag der Anmeldung: 16.09.2009
(73) Patentinhaber: Kögel Trailer GmbH & Co. KG, 89349 Burtenbach (DE)
(72) Erfinder: Hellenschmidt, Dieter, 89134 Blaustein (DE); Merk, Jochen, 88339 Bad Waldsee (DE); Rohland, Jürgen, 89312 Günzburg (DE)
(74) Vertreter: Kilchert, Jochen

(56) Entgegenhaltungen:
- DE-A1- 2 262 094
- DE-U1- 9 303 415
- DE-U1- 20 214 074
- DE-U1-202004 000 990

## Beschreibung

Die Erfindung betrifft eine Vorrichtung zur Sicherung der Ladung eines Nutzfahrzeugs gemäß dem Oberbegriff des Patentanspruchs 1. Ferner betrifft die Erfindung ein Verfahren zum Sichern von Ladung sowie ein Nutzfahrzeug mit einer derartigen Vorrichtung.

Die vorliegende Erfindung stellt eine Weiterentwicklung der nachveröffentlichten deutschen Patentanmeldung 10 2007 033 021.0 dar, die auf die Anmelderin zurückgeht. Die bekannte Vorrichtung umfasst quer zur Fahrzeuglängsrichtung auf dem Ladeboden angeordnete Querbalken, die mit senkrecht angeordneten Rungen durch Aufnahmeschuhe verbunden sind. Die Aufnahmeschuhe sind ferner lösbar mit dem Außenrahmen des Nutzfahrzeugs verbunden, sodass die Vorrichtung an verschiedenen Positionen längs des Nutzfahrzeugs angeordnet werden kann.

Die bekannte Vorrichtung wird vorzugsweise beim Transport von Betonstahlmatten eingesetzt, wobei Betonstahlmatten unterschiedlicher Breite dadurch formschlüssig gesichert werden können, indem Adapterteile an den Rungen angeordnet werden, sodass die lichte Breite zwischen den Rungen an die Breite der zu transportierenden Betonstahlmatten angepasst werden kann.

DE 20 2004 000990 U1 offenbart eine Vorrichtung zur sicherung der ladung eines Nutzfahrzeugs gemäß dem Oberbegriff des Anspruchs 1.

Eine alternative Möglichkeit zur formschlüssigen Anpassung der Rungen an die Ladung offenbart die DE 93 03 415 U. Dabei wird die formschlüssige Sicherung dadurch erreicht, dass die Rungen auf Schlitten angeordnet sind, die mit dem Außenrahmen verbundene Querbalken umgreifen und auf diesen an unterschiedlichen Positionen fixierbar sind.

Die maximale Breite der zu transportierenden Betonstahlmatten bzw. allgemein der Ladung ist dabei auf die Breite des Nutzfahrzeugs beschränkt. Ladung, deren Breite die Breite des Nutzfahrzeugs übersteigt, wird daher statt mit Rungen mit Stahlseilen bzw. - ketten gesichert.

Es hat sich gezeigt, dass durch die flexiblen Stahlseile eine ausreichende Sicherung von überbreiter Ladung nur mit hohem Aufwand gewährleistet werden kann. Insbesondere beim Transport von Betonstahlmatten kann bei Kurvenfahrten ein Versatz der Matten auftreten, wodurch die Gefahr besteht, dass der Schwerpunkt des Nutzfahrzeugs verlagert wird.

Der Erfindung liegt daher die Aufgabe zugrunde, eine Vorrichtung zur Sicherung der Ladung eines Nutzfahrzeugs anzugeben, die hinsichtlich der flexiblen Einsetzbarkeit und Transportsicherheit verbesserte Eigenschaften aufweist, insbesondere beim Transport von überbreiter Ladung. Ferner liegt der Erfindung die Aufgabe zugrunde, ein Verfahren zum Sichern von Ladung und ein Nutzfahrzeug mit einer derartigen Vorrichtung anzugeben.

Diese Aufgabe wird erfindungsgemäß im Hinblick auf die Vorrichtung durch den Gegenstand des Patentanspruchs 1, im Hinblick auf das Verfahren durch den Gegenstand des Patentanspruchs 14 und im Hinblick auf das Nutzfahrzeug durch den Gegenstand des Patentanspruchs 15 gelöst.

Der Grundgedanke der Erfindung besteht darin, eine Vorrichtung zur Sicherung der Ladung eines Nutzfahrzeugs mit wenigstens einem rechtwinklig zur Fahrzeuglängsachse angeordneten Querbalken und wenigstens einer Runge, die an einem axialen Ende des Querbalkens und zu diesem im Wesentlichen senkrecht angeordnet ist, anzugeben, wobei zur Aufnahme der Runge ein Rungenhalter vorgesehen ist, der teleskopartig verschieblich in einer Führungsschiene gelagert ist, die einerseits mit dem Querbalken und andererseits mit dem Außenrahmen verbindbar ist.

Die Erfindung hat den Vorteil, dass durch den teleskopartig verschiebbaren Rungenhalter im Wesentlichen unabhängig von der Breite der Ladung eine formschlüssige Ladungssicherung erreicht wird. Insbesondere bei überbreiter Ladung, d.h. bei Ladung, deren Breite die Breite des Nutzfahrzeugs übersteigt, ist eine formschlüssige Sicherung durch die Rungen möglich, indem der Rungenhalter über die Fahrzeugbreite bzw. den Außenrahmen hinaus ausgezogen wird. Ein Verrutschen der Ladung bei Kurvenfahrten wird somit verhindert, so dass ein plötzlicher Lastwechsel vermieden und eine stabile Fahrlage des Nutzfahrzeugs gewährleistet wird.

Ein weiterer Vorteil besteht darin, dass die Vorrichtung mehrere einzelne Bauteile umfasst, sodass einerseits eine einfache und kostengünstige Herstellung der Vorrichtung ermöglicht und andererseits die Handhabbarkeit der Vorrichtung erleichtert wird. Des Weiteren ermöglichen die verschiebbaren Rungenhalter, dass bei der Beladung des Nutzfahrzeugs die Ladung zentriert bezüglich der Fahrzeuglängsachse angeordnet werden kann. Insbesondere bei der Beladung des Nutzfahrzeugs mit einem Kran ist dabei eine Zentrierung erleichtert.

Durch die lösbare Verbindung der Führungsschiene mit dem Außenrahmen wird die flexible und universelle Einsetzbarkeit der Vorrichtung weiter verbessert, da die erfindungsgemäße Vorrichtung somit sowohl in Längsrichtung, als auch in Querrichtung an die Abmaße der zu sichernden Ladung angepasst werden kann.

Die lösbare Verbindung zwischen Führungsschiene und Außenrahmen ermöglicht eine nachträgliche Montage der erfindungsgemäßen Vorrichtung auf einem Nutzfahrzeug. Auf diese Weise kann ein Nutzfahrzeug bei Bedarf mit der erfindungsgemäßen Vorrichtung nachgerüstet werden. Dabei ist eine schnelle und kurzfristige Nachrüstung eines Nutzfahrzeugs möglich, da für die Montage der Vorrichtung im Wesentlichen kein spezielles Werkzeug erforderlich ist.

Die Querbalken dienen jeweils unter anderem als Verschleißschutzelemente, sodass eine Beschädigung des Fahrzeugbodens durch die Ladung vermieden wird. Dazu ist die Ladung im Wesentlichen auf dem Querbalken aufliegend angeordnet. Auf diese Weise wird ferner zwischen der Ladung und dem Fahrzeugboden ein Freiraum geschaffen, der ein einfaches Be- und Entladen, beispielsweise durch einen Gabelstapler oder einen Kran, ermöglicht. Der Freiraum bietet außerdem eine Durchführung für Zurrmittel und/oder Hebemittel.

Die erfindungsgemäße Vorrichtung eignet sich besonders für den Betonstahltransport, insbesondere für den Transport von Betonstahl- und/oder Listenmatten, ohne darauf eingeschränkt zu sein.

Bei einer besonders bevorzugten Ausführungsform der erfindungsgemäßen Vorrichtung ist die Führungsschiene seitlich und in Längsrichtung des Querbalkens angeordnet. Damit ist eine ungehinderte Bewegung des Rungenhalters entlang der Führungsschiene möglich. Es ist auch denkbar, dass die Führungsschiene formschlüssig in einem durch zwei parallel angeordnete Querbalken gebildeten Spalt angeordnet ist. Die mit dem Außenrahmen verbundene Führungsschiene bildet einen Anschlag, der ein Verrutschen des Querbalkens in zumindest eine Fahrzeuglängsrichtung verhindert bzw. blockiert.

Vorzugsweise umfasst der Rungenhalter ein in der Führungsschiene gelagertes waagrecht angeordnetes Führungselement und ein senkrecht angeordnetes Aufnahmeelement, das eine Öffnung zur formschlüssigen Aufnahme der Runge aufweist. Um den Formschluss zwischen Runge und Aufnahmeelement herzustellen, ist die Öffnung des Aufnahmeelements an den Querschnitt der Runge angepasst, wodurch eine einfache und schnelle Montage der Vorrichtung ermöglicht wird.

Das Führungselement des Rungenhalters kann wenigstens eine Bohrung aufweisen, in die im montierten Zustand wenigstens ein Federriegel der Führungsschiene eingreift. Durch die Betätigung des Federriegels der Führungsschiene kann das Führungselement des Rungenhalters fixiert bzw. gelöst werden, sodass der Rungenhalter bezüglich der Führungsschiene verschoben werden kann. Der Federriegel ermöglicht dabei eine schnelle und einfache Fixierung des Führungselements in verschiedenen Positionen quer zur Fahrzeuglängsachse, wodurch die Verstellung des Abstandes zwischen zwei an einem Nutzfahrzeug gegenüber montierten Rungen erleichtert wird. Vorteilhafterweise sind die Bohrungen des Führungselements derart gekennzeichnet, dass auf einfache Weise bei gegenüber angeordneten Rungenhaltern gleiche Ausschubpositionen einstellbar sind.

Bei einer bevorzugten Ausführungsform weist das Aufnahmeelement des Rungenhalters Haltemittel zur Aufnahme von Zurrmitteln, insbesondere Seilen, Gurten und/oder Ketten, auf. Zusätzlich zur formschlüssigen Einpassung der Ladung zwischen gegenüberliegenden Rungen wird die Ladung durch flexible Zurrmittel gesichert. Dabei werden die Zurrmittel üblicherweise mit dem Außenrahmen verbunden. Bei überbreiter Ladung ist die Zugänglichkeit zu den Haltemitteln im Außenrahmen erschwert, sodass durch die Haltemittel des Aufnahmeelements eine schnelle und einfache Möglichkeit zur zusätzlichen Ladungssicherung durch Zurrmittel bereitgestellt wird.

Bei einer weiteren bevorzugten Ausführungsform umfasst die Runge einen Federkraft beaufschlagten Arretierungsmechanismus, der zur lösbaren Fixierung der Runge mit dem Aufnahmeelement verrastet. Die Montage der Runge ist somit im Wesentlichen ohne Werkzeug möglich, wodurch die Handhabbarkeit der Vorrichtung erleichtert ist.

Vorzugsweise umfasst die Führungsschiene zumindest abschnittsweise ein Hutprofil. Dabei kann wenigstens eine Flanke des Hutprofils einen Querbalken übergreifen. Dadurch wird eine besonders stabile Verbindung zwischen der Führungsschiene und dem Querbalken erreicht. Auf welcher Seite der Führungsschiene der Querbalken angeordnet wird, ist dem Anwender bzw. Fachmann überlassen, der die zweckmäßige Anordnung beispielsweise anhand der Form und der Gewichtsverteilung der Ladung bestimmt. Dabei ist nicht ausgeschlossen, dass auf beiden Seiten des Hutprofils ein Querbalken angeordnet wird.

Vorzugsweise weist die Flanke der Führungsschiene Bohrungen zur Fixierung von Ladungssicherungsmitteln, insbesondere Sicherungskeilen, auf. Durch zusätzliche Ladungssicherungsmittel wird ermöglicht, dass die Vorrichtung auch für Ladung eingesetzt werden kann, für die die Sicherung durch die verstellbaren Rungen nicht ausreicht oder unzweckmäßig ist. Beispielsweise können Sicherungskeile auf den Führungsschienen angeordnet werden, um die Vorrichtung zum Transport von zylinderförmiger Ladung, beispielsweise beim Betonstahl- oder Sondertransport, einzusetzen, wobei die Erfindung nicht darauf eingeschränkt ist. Dabei können die Sicherungskeile mit ihrer gewölbten bzw. die Last aufnehmenden Fläche sowohl in Richtung zur Fahrzeugmittelachse, als auch zum Außenrahmen weisend angeordnet sein.

Die Führungsschiene kann an einem axial inneren Ende eine Abdeckung aufweisen, die einen Anschlag für den Rungenhalter bildet. Auf diese Weise wird eine Kippsicherung für den Rungenhalter bereitgestellt, wenn der Rungenhalter über die Fahrzeugbreite hinaus ausgezogen ist.

Ferner kann die Führungsschiene an einem axial äußeren Ende einen Flansch aufweisen, der mit dem Außenrahmen verbindbar ist. Mit dem mit dem Außenrahmen verbindbaren Flansch wird erreicht, dass die Vorrichtung zur Ladungssicherung an unterschiedlichen Stellen des Außenrahmens in Fahrzeuglängsrichtung angeordnet werden kann, sodass die Anzahl und der Abstand mehrerer Vorrichtungen eines Nutzfahrzeugs je nach Art der Ladung veränderbar ist.

Vorzugsweise ist die Führungsschiene mit dem Flansch verbindbar, insbesondere in den Flansch einhakbar. Auf diese Weise wird die Montage der Ladungssicherungsvorrichtung weiter vereinfacht, da durch eine einfache Kippbewegung die Führungsschiene vom Flansch und somit vom Außenrahmen getrennt werden kann. Durch die ohne Werkzeug einfach lösbaren Elemente, insbesondere die Führungsschiene und die Runge, wird ein flexibler Einsatz des Nutzfahrzeugs ermöglicht, da die Ladungssicherungsvorrichtung schnell demontiert werden kann, um andere Ladungsgüter zu befördern. Die einzelnen Elemente der Ladungssicherungsvorrichtung können dabei beispielsweise in einem Palettenkasten des Nutzfahrzeugs verstaut werden, so dass das Nutzfahrzeug jederzeit mit der Ladungssicherung ausgerüstet werden kann.

Der Flansch weist vorzugsweise Haltemittel zur Aufnahme von Zurrmitteln, insbesondere Seilen, Gurten und/oder Ketten, auf. Durch die Haltemittel am Flansch wird eine zusätzliche Möglichkeit bereitgestellt, Zurrmittel zur Sicherung der Ladung anzubringen. Insbesondere bei der sogenannten Diagonalverspannung von Baustahlmatten bzw. Betonstahlmatten mit Zurrmitteln wird dadurch die Handhabbarkeit verbessert.

Ferner beruht die Erfindung auf dem Gedanken, ein Verfahren zum Sichern von Ladung auf einem Nutzfahrzeug mit wenigstens einem rechtwinklig zur Fahrzeuglängsachse angeordneten Querbalken und wenigstens einer Runge, die an einem axialen Ende des Querbalkens und zu diesem im Wesentlichen senkrecht angeordnet wird, anzugeben, wobei eine Führungsschiene einerseits mit dem Querbalken und andererseits mit dem Außenrahmen verbunden und der Rungenhalter teleskopartig zur formschlüssigen Anpassung der Rungen an die Ladung in der Führungsschiene verschoben wird.

Die Erfindung wird im Folgenden anhand von Ausführungsbeispielen unter Bezug auf die beigefügten schematischen Zeichnungen näher erläutert. Darin zeigen
- Fig. 1: eine perspektivische Ansicht einer Vorrichtung zur Sicherung von Ladung gemäß einem erfindungsgemäßen Ausführungsbeispiel;
- Fig. 2: eine Draufsicht der Vorrichtung gemäß Fig. 1;
- Fig. 3: eine Vorderansicht der Vorrichtung gemäß Fig. 1;
- Fig. 4: einen Querschnitt durch eine Vorrichtung gemäß Fig. 1;
- Fig. 5: eine perspektivische Detailansicht einer Führungsschiene der Vorrichtung gemäß Fig. 1 im montierten Zustand;
- Fig. 6: eine Detailansicht der Vorrichtung gemäß Fig. 3; und
- Fig. 7: einen Längsschnitt durch eine Runge der Vorrichtung gemäß Fig. 1.

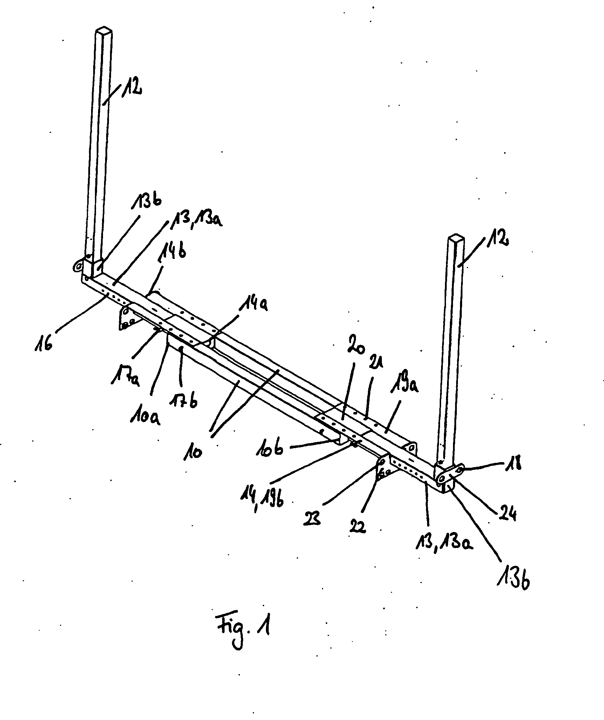

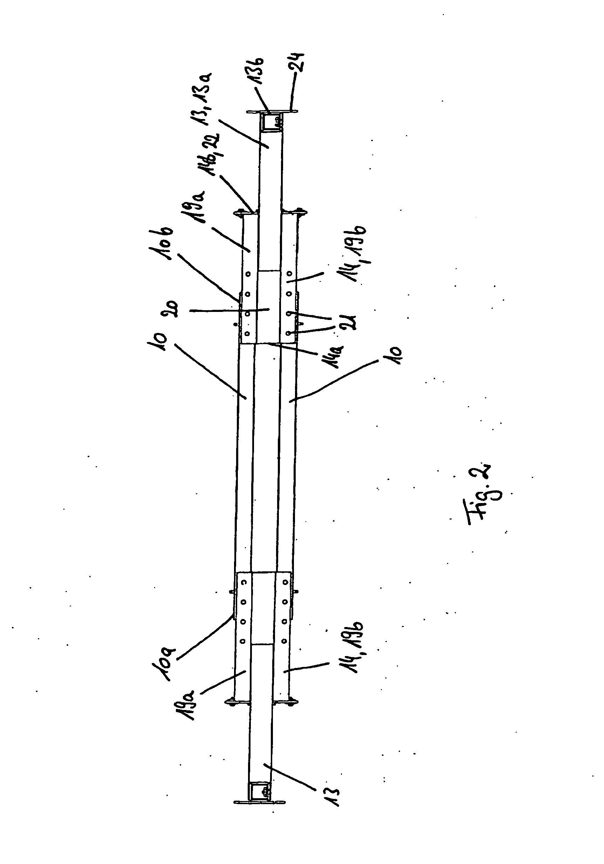

Fig. 1 stellt einen Überblick über die Bauteile einer Vorrichtung zur Sicherung von Ladung gemäß einem bevorzugten Ausführungsbeispiel dar, wobei die Vorrichtung jeweils zwei Querbalken 10, Führungsschienen 14, Rungenhalter 13 und Rungen 12 umfasst. Die Querbalken 10 sind vorzugsweise als Holzbalken ausgebildet, wobei nicht ausgeschlossen ist, dass die Querbalken 10 andere Materialien aufweisen. Generell kann die Vorrichtung sowohl einen Querbalken 10 aufweisen, der an einer Seite der Führungsschiene 14 angebracht ist, als auch zwei Querbalken 10, die beidseitig an der Führungsschiene 14 angeordnet sind. Insofern sind durch die Darstellungen zweier Querbalken 10 in den Figuren 1, 2 und 4 alle Möglichkeiten der Anordnung der Querbalken 10 angedeutet, wobei die Verwendung von einem einzelnen Querbalken 10 in der Praxis bevorzugt ist.

An den axialen Enden 10a, 10b der Querbalken 10 sind jeweils die Führungsschienen 14 angeordnet, wobei die Querbalken 10 an ihren axialen Enden 10a, 10b jeweils eine Bohrung 11 aufweisen, durch die ein Stehbolzen 17b der Führungsschiene 14 hindurch geführt ist. Der Stehbolzen 17b weist im Allgemeinen ein axiales Sicherungselement auf, das eine sichere Verbindung zwischen dem Querbalken 10 und der Führungsschiene 14 gewährleistet. Das Sicherungselement kann einen Fallriegel, einen Federstecker, einen Splint oder Klappsplint oder andere geeignete Sicherungselemente umfassen.

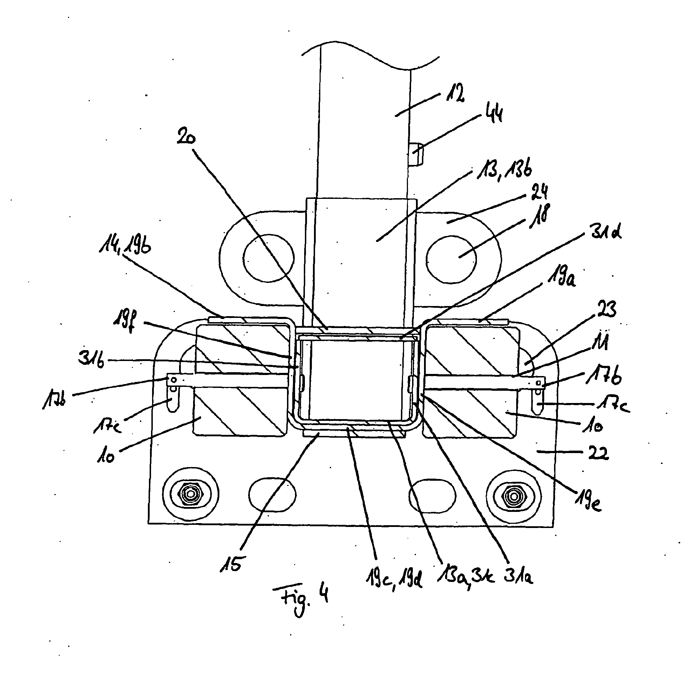

Die Fixierung der Führungsschienen 14 an den axialen Enden 10a, 10b der Querbalken 10 zeigt beispielhaft Fig. 4. Darin ist ein Querschnitt durch die Querbalken 10 und die Führungsschiene 14 auf Höhe der Stehbolzen 17b dargestellt. Die Führungsschiene 14 weist ein Hutprofil auf, das einen U-förmigen Abschnitt 19c und zwei Flanken 19a, 19b umfasst. Der U-förmige Abschnitt 19c ist durch einen Boden 19d und zwei im Wesentlichen senkrecht zum Boden 10c angeordneten Seitenwände 19e, 19f bestimmt. Im montierten Zustand ist zwischen jeweils einer Seitenwand 19e, 19f und einer senkrecht zu der Seitenwand 19e, 19f angeordneten Flanke 19a, 19b sowie dem Nutzfahrzeugladeboden (nicht dargestellt) eine Ausnehmung gebildet, in der der Querbalken 10 angeordnet ist. Im Allgemeinen übergreift demnach die Flanke 19a, 19b den Querbalken 10, wobei das Hutprofil bei Verwendung zweier Querbalken 10 in einen zwischen den parallel zueinander angeordneten Querbalken 10 gebildeten Spalt formschlüssig eingreift. Dabei sind die Querbalken 10 vorzugsweise höher als der U-förmige Abschnitt 19c der Führungsschiene 14, so dass der Boden 19d der Führungsschiene 14 den Ladeboden (nicht dargestellt) des Nutzfahrzeugs nicht berührt. Dadurch wird vermieden, dass der Ladeboden des Nutzfahrzeugs durch die Führungsschiene 14 beschädigt wird. Zwischen dem Boden 19d und dem Ladeboden des Nutzfahrzeugs kann vorteilhafterweise, insbesondere bei Verwendung eines einzelnen Querbalkens 10, eine Antirutschmatte 15 angeordnet sein. Dadurch wird einerseits der Ladeboden geschont und andererseits verhindert, dass die Führungsschiene 14 unter Einfluss der Gewichtskraft der Ladung auf dem Ladeboden verrutscht. Insbesondere werden über die Antirutschmatte 15 beim Beschleunigen oder Bremsen auftretende Reibungskräfte in den Ladeboden eingeleitet, so dass die Belastung der mit dem Außenrahmen 30 verbundenen Flansche 22 reduziert wird.

Die Seitenwände 19e, 19f der Führungsschiene bzw. des U-förmigen Abschnitts 19c der Führungsschiene 14 weisen jeweils zumindest einen Stehbolzen 17b auf, der im montierten Zustand in eine entsprechende Bohrung 11 im Querbalken 10 eingreift. Bei der Montage der Vorrichtung wird also der Querbalken 10 mit der Bohrung 11 über den Stehbolzen 17b geschoben, wobei der Stehbolzen 17b einen Fallriegel 17c umfasst, der an dem freien Ende des Stehbolzens 17b gelenkig gelagert ist. Der Fallriegel 17c wird bei der Montage manuell in eine mit dem Stehbolzen 17b fluchtende Position geklappt. Sobald der Querbalken 10 an der Führungsschiene 14 angebracht und somit der Fallriegel 17c frei ist, nimmt der Fallriegel 17c eine bezüglich des Stehbolzens 17b rechtwinklige Position ein, so dass verhindert ist, dass der Querbalken 10 aus seiner formschlüssigen Einpassung im Hutprofil der Führungsschiene 14 herausgleitet. Vorzugsweise ist der Stehbolzen 17b mit der Führungsschiene 14, insbesondere einer Seitenwand 19e, 19f der Führungsschiene 14, verschweißt oder verbolzt. Andere Verbindungsarten sind möglich.

Die Flanken 19a, 19b der Führungsschiene 14 weisen jeweils Bohrungen 21 auf, so dass zusätzliche Ladungssicherungselemente auf der Führungsschiene 14 angeordnet und mit dieser fest verbunden werden können. Beispielsweise kann als zusätzliches Sicherungselement ein verstellbarer Keil gemäß der auf die Anmelderin zurückgehenden EP 09 82 188 B1 eingesetzt werden. Durch die mehreren Bohrungen 21 wird erreicht, dass der Keil in verschiedenen Positionen angeordnet und somit an die entsprechende Ladung angepasst werden kann. Vorzugsweise weist das Sicherungselement gemäß EP 0 982 188 B1 Bolzen auf, die jeweils eine Hinterschneidung umfassen. Beispielsweise können die Bolzen an ihrem freien Ende einen größeren Querschnittsdurchmesser aufweisen, als an einem dem Sicherungselement zugewandten Ende (nicht dargestellt). Sobald das Sicherungselement, insbesondere der keilförmige Körper, mit einer horizontalen Kraftkomponente beaufschlagt wird, umgreift die Hinterschneidung im Bolzen die Flanke 19a, 19b der Führungsschiene 14, wodurch das Sicherungselement somit in der Flanke 19a, 19b *formschlüssig* verankert wird. Dazu weist das Sicherungselement einen Schlitten mit derartigen Bolzen und einen auf dem Schlitten angebrachten Sicherungskeil auf, der durch eine Spindel gegenüber dem Schlitten verschiebbar ist. Zur Ladungssicherung wird der keilförmige Körper mit Hilfe der Spindel gegen die Ladung gepresst, so dass der Schlitten entgegengesetzt verschoben wird und somit die Bolzen in den Bohrungen 21 verspannt werden. Die Verbindung zwischen dem Keil oder allgemein einem Ladungssicherungselement und der Führungsschiene 14 kann auch durch Verschrauben erfolgen.

Wie in den Figuren 1, 2 und 4 zu erkennen, weist die Führungsschiene 14 an einem axial inneren Ende 14a eine Abdeckung 20 auf, die sich im Wesentlichen senkrecht zu den Seitenwänden 19e, 19f und zwischen diesen erstreckt. In Längsrichtung der Führungsschiene 14 erstreckt sich die Abdeckung 20 etwa bis zur Mitte der Führungsschiene 14. Eine andere Längserstreckung der Abdeckung 20 ist möglich.

Die Abdeckung 20 stellt einen Anschlag bzw. eine Kippsicherung für den Rungenhalter 13 dar, der im U-förmigen Abschnitt 19c der Führungsschiene 14 verschiebbar angeordnet ist. Der Rungenhalter 13 umfasst ein Führungselement 13a, das in der Führungsschiene 14 geführt ist, und ein Aufnahmeelement 13b, das sich im Wesentlichen senkrecht zum Führungselement 13a erstreckt und an einem axial äußeren Ende des Führungselements 13a angeordnet ist.

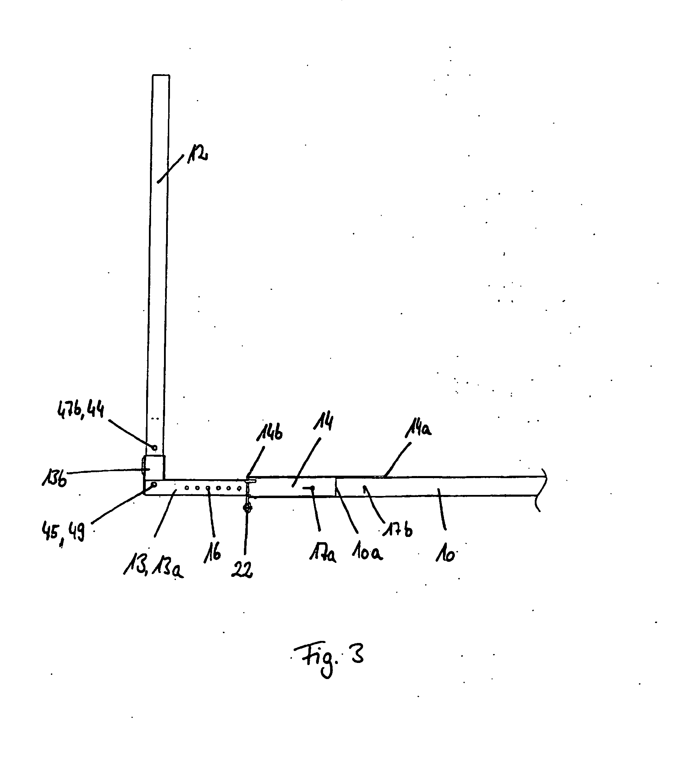

Das Führungselement 13a umfasst im Wesentlichen ein Vierkanthohlprofil, das mit dem U-förmigen Abschnitt 19c der Führungsschiene 14 fluchtend und in diesem formschlüssig eingepasst ist. Vorzugsweise ist das Vierkantprofil durch ein U-Profil gebildet, das die Seitenwände 31a, 31b und einen Boden 31c umfasst, sowie eine Platte 31d, die parallel zum Boden 31c angeordnet ist und die offene Seite des U-Profils abdeckt. Das axial äußere Ende des U-Profils umschließt das Aufnahmeelement 13b, d.h. dass das Aufnahmeelement 13b in der Ausnehmung des U-Profils angeordnet ist. Somit erstreckt sich die abdeckende Platte nicht über die gesamte Länge des U-Profils, sondern endet am Aufnahmenelement 13b. Es ist generell möglich, dass sowohl die Führungsschiene 14, als auch das Führungselement 13a andere Querschnitte aufweisen, wobei aufeinander abgestimmte Querschnitte zur Bildung einer formschlüssigen, verschieblichen, insbesondere teleskopartigen, Verbindung bevorzugt sind. Die Seitenwände 31 a, 31 b des Führungselements 13a weisen mehrere Bohrungen 16 auf, deren Bohrungsdurchmesser im Wesentlichen dem Durchmesser der beiden in den Seitenwänden 19e, 19f gegenüber angeordneten Bohrungen (nicht dargestellt) des Führungselements 14 entsprechen. Die Führungsschiene 14 weist zwei in den Seitenwänden 19e, 19f gegenüber angeordnete Federriegel 17a auf, die in die Bohrungen 16 des Führungselements 13a eingreifen. Durch die mehreren Bohrungen 16 kann das Führungselement 13a in unterschiedlich ausgezogenen Positionen in der Führungsschiene 14 fixiert werden (Fig. 3).

Die axiale Länge des Führungselements 13a ist dabei angepasst derart, dass der am Führungselement 13a befestigte Rungenhalter 13 über die Position des im Gebrauch mit dem Außenrahmen verbundenen Flansches 22 hinaus ausgezogen und arretiert werden kann. Überdies ist die axiale Länge des Führungselementes 13a so bemessen, dass das im Gebrauch innen angeordnete axiale Ende des Führungselementes 13a bei komplett ausgezogenen Führungselementen 13a mit der Abdeckung 20 zum Zwecke der Kippsicherung für den Rungenhalter 13 zusammenwirkt. Das bedeutet, dass das axiale Ende unterhalb der Abdeckung 20 angeordnet ist. Der minimale Abstand zwischen den beiden Rungenhaltern 13 der gegenüber angeordneten Führungssysteme eines Rungenpaares 12 wird durch die beiden axialen Enden der Führungselemente 13a bestimmt, die im vollständig zusammen geschobenen Zustand bei symmetrischer Anordnung des Rungenpaares 12 in der Mitte des Querbalkens 10 zusammenstoßen bzw. in Anlage sind. Bei kürzer ausgebildeten Führungselementen 13a wird der minimale Abstand zwischen gegenüber angeordneten Rungen 12 durch die Abdeckung 20 bestimmt, die nicht nur einen vertikalen Anschlag zur Kippsicherung, sondern auch einen horizontalen Anschlag bildet. Dazu weist das Führungselement 13a ferner am axial inneren Ende 14a einen Endanschlag, beispielsweise eine Platte, (nicht dargestellt) auf, der verhindert, dass der Rungenhalter 13 vollständig aus der Führungsschiene 14 herausgezogen wird. Um die Herstellung bzw. Montage der Vorrichtung zu erleichtern, kann der Endanschlag lösbar mit dem Führungselement 13a verbunden, insbesondere verschraubt, sein.

Das Aufnahmeelement 13b des Rungenhalters 13 weist vorzugsweise denselben Querschnitt auf, wie das Führungselement 13a. Andere Querschnitte sind ebenfalls möglich. Im Allgemeinen umfasst das Aufnahmeelement 13b ein Hohlprofil, insbesondere ein Vierkanthohlprofil. Das Aufnahmeelement 13b dient zur formschlüssigen Aufnahme einer Runge 12, die einen Querschnitt aufweist, der im montierten Zustand in den Querschnitt des Aufnahmeelements 13b eingepasst ist. An einer Außenseite des Aufnahmeelements 13b ist eine Halteplatte 24 angeordnet, insbesondere mit dem Aufnahmeelement 13b verschweißt, verschraubt oder verbolzt. Die Halteplatte 24 ragt in Fahrzeuglängsrichtung über das Aufnahmeelement 13b hinaus und weist in den überragenden Abschnitten jeweils eine Zurröse 18 auf, in die Zurrmittel, beispielsweise Seile oder Ketten, eingehakt werden können.

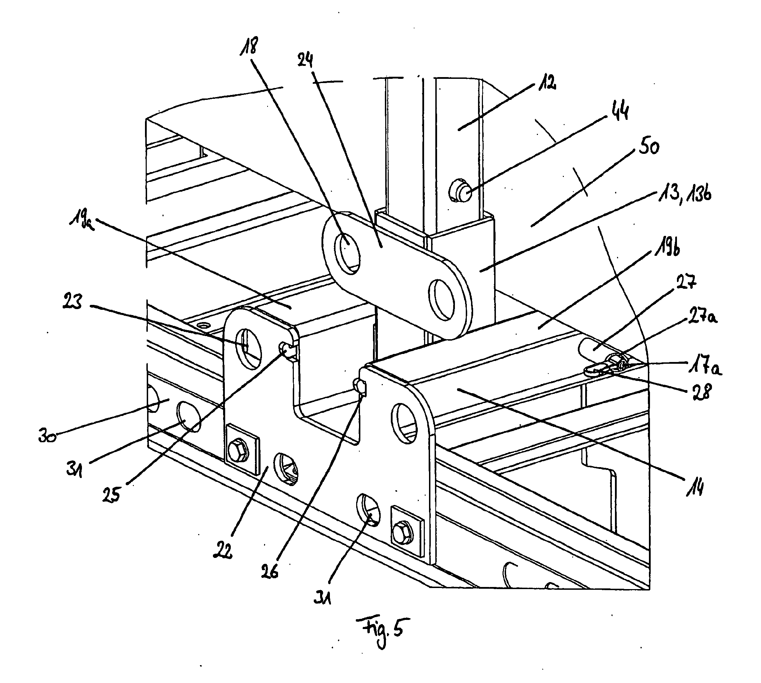

Zur Verbindung der Führungsschiene 14 mit einem Außenrahmen 30 ist an einem axial äußeren Ende 14b der Führungsschiene 14 ein Flansch 22 angeordnet (Fig. 5). Der Flansch 22 weist im Wesentlichen eine rechteckige Form auf, wobei die beiden im montierten Zustand oberen Ecken des Flanschs 22 abgerundet sind und der Flansch 22 ferner eine U-förmige Ausnehmung umfasst, die dem U-förmigen Abschnitt 19c der Führungsschiene 14 angepasst ist und mit dieser fluchtet. Wie in Fig. 5 gut zu erkennen, weist der Flansch 22 in einem unteren Abschnitt Bohrungen 31 auf, die im montierten Zustand mit Bohrungen 32 im Außenrahmen 30 des Nutzfahrzeugs fluchten, so dass der Flansch 22 mit dem Außenrahmen 30 verschraubt werden kann. Der Flansch 22 kann auch auf andere Weise mit dem Außenrahmen 30 verbunden werden, beispielsweise kann der Flansch 22 mit dem Außenrahmen 30 verbolzt oder verschweißt werden. Bevorzugt ist eine lösbare Verbindung zwischen Flansch 22 und Außenrahmen 30, so dass die Vorrichtung zur Sicherung der Ladung in Fahrzeuglängsrichtung an unterschiedlichen Positionen des Außenrahmens 30 befestigt werden kann. Dadurch kann die Vorrichtung nicht nur an die Breite der Ladung angepasst werden, sondern auch an die Länge des jeweiligen Ladeguts.

Die Verbindung zwischen dem Flansch 22 und der Führungsschiene 14 erfolgt durch Haken 25, die jeweils an einer Außenseite der Seitenwände 19e, 19f der Führungsschiene 14 angeordnet sind. Vorzugsweise sind die Haken 25 mit der Führungsschiene 14 verschweißt. Andere Verbindungsarten sind möglich.

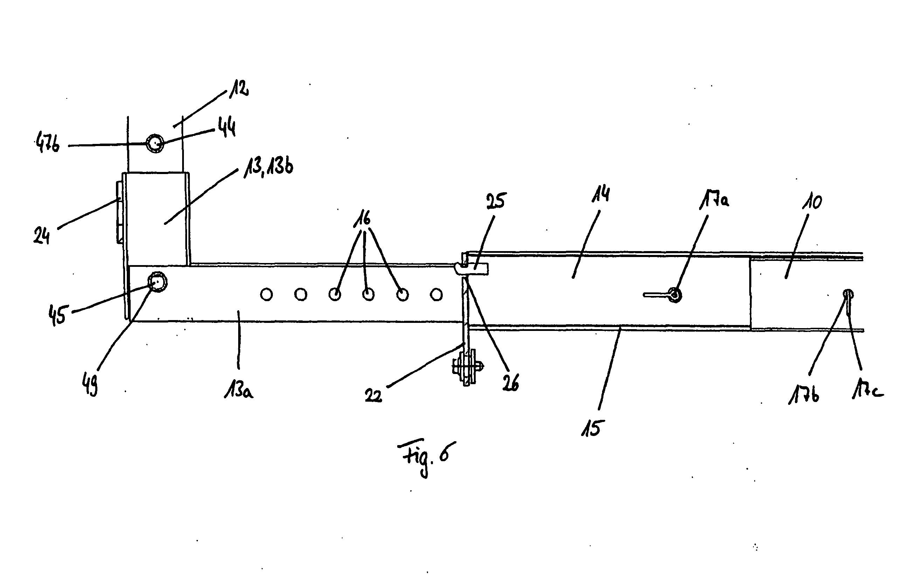

Im oberen Bereich der U-förmigen Ausnehmung weist der Flansch 22 zwei gegenüberliegende Ausnehmungen 26 auf, die im montierten Zustand mit den Haken 25 der Führungsschiene 14 fluchten. Vorzugsweise sind die Haken 25 an ihren Enden nach oben gebogen, so dass durch Anheben des axial inneren Endes 14a der Führungsschiene 14 die Haken 25 aus den Ausnehmungen 26 des Flanschs 22 aushaken. Auf diese Weise kann die Führungsschiene 14 bei Bedarf schnell und einfach, insbesondere ohne Werkzeug, montiert bzw. demontiert werden, um die Ladefläche für den Transport anderer Ladung freizugeben (Fig. 6).

Des Weiteren ist in Fig. 5 zu erkennen, dass der Federriegel 17a in einer Hülse 27 und zu dieser koaxial angeordnet ist, wobei die Hülse 27 fest mit einer Seitenwand 19e, 19f der Führungsschiene 14 verbunden ist. Die Hülse 27 weist ein schräges Ende 27a auf, so dass der Federriegel 17a aus der Hülse 27 bewegt wird, wenn der Betätigungshebel 28 über das schräge Ende 27a gleitend gedreht wird. Durch die damit bewirkte axiale Bewegung des Federriegels 17a wird die Bohrung 16 im Führungselement 13a des Rungenhalters 13 freigegeben, so dass der Rungenhalter 13a entlang der Führungsschiene 14 verschoben werden kann. Anstelle des Federriegels 17a können auch andere Verriegelungsorgane, beispielsweise ein Bolzen mit einem Sicherungssplint, eingesetzt werden. Der Federriegel 17a kann auch einen Betätigungshebel 28 aufweisen, der eine axiale Bewegung 17a des Federriegels 17a durch eine Kipp- bzw. Klappbewegung bewirkt.

Im Bereich der abgerundeten Ecken des Flanschs 22 sind Zurrösen angeordnet, die im Wesentlichen in ihrer Form und Funktion den Zurrösen 18 des Aufnahmeelements 13b des Rungenhalters 13 entsprechen.

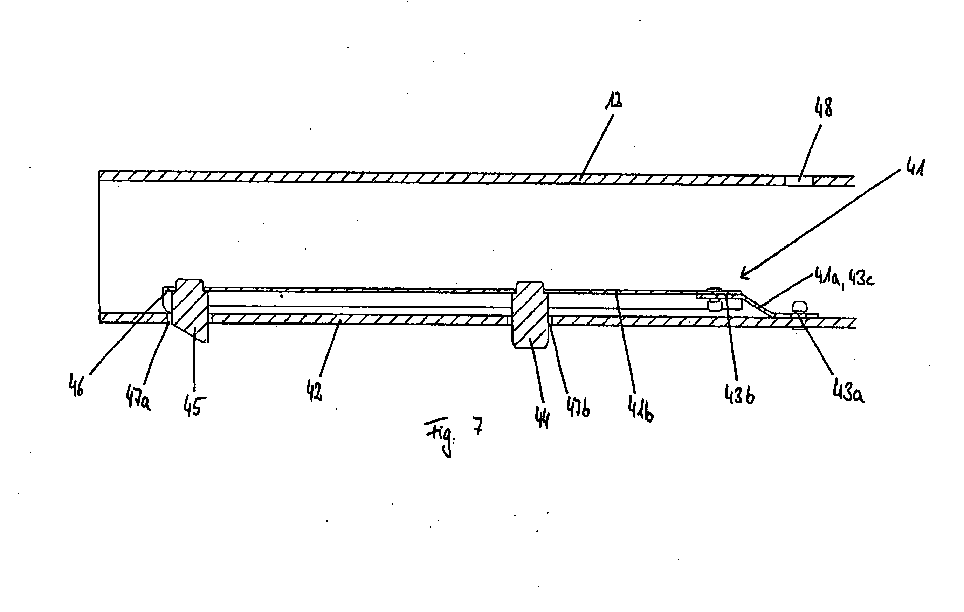

Um auch eine Fixierung der Runge 12 im Aufnahmeelement 13b ohne den Einsatz eines Werkzeugs zu erreichen, umfasst die Runge 12 vorzugsweise ein Hohlprofil, insbesondere ein Vierkantrohr, wobei innerhalb des Hohlprofils ein Arretierungsmechanismus 41 angeordnet ist. Ein Ausführungsbeispiel eines derartigen Arretierungsmechanismus 41 ist in Fig. 7 dargestellt. Darin ist ein Längsschnitt durch eine Runge 12 gezeigt, wobei in einer Außenwand 42 der Runge 12 ein Federelement 41a angeordnet ist, das mit einer Betätigungsplatte 41b verbunden ist. Das Federelement 41a weist zwei parallel zur Außenwand 42 angeordnete Endabschnitte 43a, 43b auf, die durch einen schräg verlaufenden mittleren Abschnitt 43c verbunden sind. Der Endabschnitt 43a ist dabei mit der Außenwand 42 verbunden, insbesondere mit dieser verbolzt. Der Endabschnitt 43b ist mit der Betätigungsplatte 41b verbunden derart, dass die Betätigungsplatte 41b im Wesentlichen frei schwingend angeordnet ist. Die Betätigungsplatte 41 b weist ferner einen Betätigungsbolzen 44 und einen Arretierungsbolzen 45 auf, wobei der Arretierungsbolzen 45 an einem freien Ende 46 der Betätigungsplatte 41b angeordnet ist. Der Betätigungsbolzen 44 ist zwischen dem Arretierungsbolzen 45 und dem Federelement 41a angeordnet.

Die Außenwand 42 der Runge 12 weist ferner eine Arretierungsöffnung 47a sowie eine Betätigungsöffnung 47b auf, wobei der Arretierungsbolzen 45 durch die Arretierungsöffnung 47a und der Betätigungsbolzen 44 durch die Betätigungsöffnung 47b hindurchgreift. Wie in Fig. 3 gut zu erkennen, weist auch der Rungenhalter 13 an einem axial äußeren Ende des Führungselements 13a eine entsprechende Rastöffnung 49 auf, in die der Arretierungsbolzen 45 im montierten Zustand eingreift, so dass die Runge 12 im Aufnahmeelement 13b fixiert ist. Der Arretierungsbolzen 45 weist an seinem freien Ende eine Schräge auf, so dass beim Einschieben der Runge 12 in das Aufnahmeelement 13b der Arretierungsbolzen 45 in das Innere der Runge 12 gedrückt wird. Durch die Federspannung des Federelements 41a rastet der Arretierungsbolzen 45 in die Rastöffnung 49 des Aufnahmeelements 13b ein, sobald die Runge 12 vollständig in das Aufnahmeelement 13b eingeschoben ist. Zum Lösen der Runge 12 wird vom Anwender der Betätigungsbolzen 44 in das Rungeninnere gedrückt, so dass der Arretierungsbolzen 45 aus der Rastöffnung 49 des Aufnahmeelements 13b herausgleitet und die Runge 12 somit aus dem Aufnahmeelement 13b herausgezogen werden kann.

Fig. 5 zeigt beispielhaft den Einsatz der Vorrichtung zur Sicherung von Ladung, die eine geringere Breite aufweist, als die Breite des Nutzfahrzeugs. Dabei ist der Rungenhalter 13 nach innen verschoben, so dass eine formschlüssige Sicherung des Ladungsstücks 50 erreicht wird. Durch die teleskopartige Verbindung zwischen dem Rungenhalter 13 und der Führungsschiene 14 ist es möglich, überbreite Ladungsstücke 50 zu sichern, indem der Rungenhalter 13 bzw. die Runge 12 über den am Außenrahmen 30 befestigten Flansch 22 hinausgeschoben wird. Vorzugsweise sind die Bohrungen 16 im Führungselement 13a des Rungenhalters 13 maßlich beschriftet bzw. markiert, so dass einfach und schnell auf beiden Seiten des Nutzfahrzeugs der gleiche Abstand der Runge 12 vom Außenrahmen 30 bzw. Flansch 22 eingestellt werden kann, um das Ladungsstück 50 zentriert auf das Nutzfahrzeug zu laden.

Des Weiteren weist die Runge 12 eine Montagebohrung 48 auf, die dem Endabschnitt 43a des Federelements 41 a gegenüber angeordnet ist und mit dem Bolzen, der den Endabschnitt 43a mit der Außenwand 42 verbindet, fluchtet. Die Montageöffnung 48 stellt dabei einen Zugang zum Rungeninneren bereit, so dass die Herstellung der Verbindung zwischen dem Arretierungsmechanismus 41 und der Runge 12 vereinfacht wird.

Mit der hier beschriebenen Vorrichtung kann auf besonders vorteilhafte Weise Ladung gesichert werden, die eine größere Breite aufweist als das Nutzfahrzeug. Zur Kennzeichnung der Überbreite der Ladung können die Rungen 12 Markierungen aufweisen, die eine optische Warnfunktion für andere Verkehrsteilnehmer darstellen. Derartige Markierungen können beispielsweise Schilder oder selbstklebende Folien sein. Vorzugsweise haben die Schilder bzw. Folien eine Licht reflektierende Oberfläche, um auch bei Dunkelheit eine ausreichende Sichtbarkeit der Warneinrichtung zu gewährleisten.

### Bezugszeichenliste

- 10: Querbalken
- 10a, 10b: axiales Ende
- 11, 16, 21, 31, 32: Bohrung
- 12: Runge
- 13: Rungenhalter
- 13a: Führungselement
- 13b: Aufnahmeelement
- 14: Führungsschiene
- 14a: axial inneres Ende
- 14b: axial äußeres Ende
- 15: Antirutschmatte
- 17a: Federriegel
- 17b: Stehbolzen
- 17c: Fallriegel
- 18, 23: Zurröse
- 19a, 19b: Flanke
- 19c: U-förmiger Abschnitt
- 19d,31c: Boden
- 19e, 19f, 31 a, 31 b: Seitenwand
- 20: Abdeckung
- 22: Flansch
- 24: Halteplatte
- 25: Haken
- 26: Ausnehmung
- 27: Hülse
- 27a: schräges Ende
- 28: Betätigungshebel
- 30: Außenrahmen
- 31d: Platte
- 41: Arretierungsmechanismus
- 41 a: Federelement
- 41 b: Betätigungsplatte
- 42: Außenwand
- 43a, 43b: Endabschnitt
- 43c: mittlerer Abschnitt
- 44: Betätigungsbolzen
- 45: Arretierungsbolzen
- 46: freies Ende
- 47a: Arretierungsöffnung
- 48: Montagebohrung
- 47b: Öffnung
- 49: Rastöffnung
- 50: Ladungsstück

## Patentansprüche

1. Vorrichtung zur Sicherung der Ladung eines Nutzfahrzeugs mit wenigstens einem rechtwinklig zur Fahrzeuglängsachse angeordneten Querbalken (10) und wenigstens einer Runge (12), die an einem axialen Ende (10a, 10b) des Querbalkens (10) und zu diesem im Wesentlichen senkrecht angeordnet ist, wobei zur Aufnahme der Runge (12) ein Rungenhalter (13) vorgesehen ist, **dadurch gekennzeichnet, dass**
der Rungenhalter (13) teleskopartig verschieblich in einer Führungsschiene (14) gelagert ist, die einerseits mit dem Querbalken (10) verbunden und andererseits mit einem Außenrahmen (30) des Nutzfahrzeugs verbindbar ist.

2. Vorrichtung nach Anspruch 1,
**dadurch gekennzeichnet, dass**
die Führungsschiene (14) seitlich und in Längsrichtung des Querbalkens (10) angeordnet ist.

3. Vorrichtung nach Anspruch 1 oder 2,
**dadurch gekennzeichnet, dass**
der Rungenhalter (13) ein in der Führungsschiene (14) gelagertes waagrecht angeordnetes Führungselement (13a) und ein senkrecht angeordnetes Aufnahmeelement (13b) umfasst, das eine Öffnung zur formschlüssigen Aufnahme der Runge (12) aufweist.

4. Vorrichtung nach Anspruch 3,
**dadurch gekennzeichnet, dass**
das Führungselement (13a) des Rungenhalters (13) zumindest eine Bohrung (16) aufweist, in die im montierten Zustand wenigstens ein Federriegel (17a) der Führungsschiene (14) eingreift.

5. Vorrichtung nach wenigstens einem der Ansprüche 1 bis 4,
**dadurch gekennzeichnet, dass**
das Aufnahmeelement (13b) des Rungenhalters (13) Haltemittel (18) zur Aufnahme von Zurrmitteln, insbesondere Seilen, Gurten und/oder Ketten, aufweist.

6. Vorrichtung nach wenigstens einem der Ansprüche 1 bis 5,
**dadurch gekennzeichnet, dass**
die Runge (10) einen Federkraft beaufschlagten Arretierungsmechanismus (41) aufweist, der zur lösbaren Fixierung der Runge (12) mit dem Aufnahmeelement (13b) verrastet.

7. Vorrichtung nach wenigstens einem der Ansprüche 1 bis 6,
**dadurch gekennzeichnet, dass**
die Führungsschiene (14) zumindest abschnittsweise ein Hutprofil umfasst.

8. Vorrichtung nach Anspruch 7,
**dadurch gekennzeichnet, dass**
eine Flanke (19a, 19b) des Hutprofils den Querbalken (10) übergreift.

9. Vorrichtung nach Anspruch 8,
**dadurch gekennzeichnet, dass**
die Flanke (19a, 19b) der Führungsschiene (14) Bohrungen (21) zur Fixierung von Ladungssicherungsmitteln, insbesondere Sicherungskeilen, umfasst.

10. Vorrichtung nach wenigstens einem der Ansprüche 1 bis 9,
**dadurch gekennzeichnet, dass**
die Führungsschiene (14) an einem axial inneren Ende (14a) eine Abdeckung (20) aufweist, die einen Anschlag für den Rungenhalter (13) bildet.

11. Vorrichtung nach wenigstens einem der Ansprüche 1 bis 10,
**dadurch gekennzeichnet, dass**
der Führungsschiene (14) an einem axial äußeren Ende (14b) ein Flansch (22) zugeordnet ist, der mit dem Außenrahmen (30) verbindbar ist.

12. Vorrichtung nach Anspruch 11,
**dadurch gekennzeichnet, dass**
die Führungsschiene (14) mit dem Flansch (22) verbindbar, insbesondere in den Flansch (22) einhakbar ist.

13. Vorrichtung nach Anspruch 11 oder 12,
**dadurch gekennzeichnet, dass**
der Flansch (22) Haltemittel (23) zur Aufnahme von Zurrmitteln, insbesondere Seilen, Gurten und/oder Ketten, aufweist.

14. Verfahren zum Sichern von Ladung auf einem Nutzfahrzeug mit wenigstens einem rechtwinklig zur Fahrzeuglängsachse angeordneten Querbalken (10) und wenigstens einer Runge (12), die an einem axialen Ende (10a, 10b) des Querbalkens (10) und zu diesem im Wesentlichen senkrecht angeordnet wird, wobei eine Führungsschiene (14) einerseits mit dem Querbalken (10) und andererseits mit dem Außenrahmen (30) verbunden und der Rungenhalter (13) zur formschlüssigen Anpassung der Rungen (12) an die Ladung teleskopartig in der Führungsschiene (14) verschoben wird.

15. Nutzfahrzeug mit einer Vorrichtung zur Ladungssicherung nach wenigstens einem der Ansprüche 1 bis 13.

## Claims

1. A device for securing the load of a commercial vehicle with at least one cross-beam (10) arranged at a right angle to the longitudinal vehicle axis and at least one stake (12) arranged at an axial end (10a, 10b) of the cross-beam (10) and essentially perpendicular to same, wherein a stake holder (13) is provided to receive said stake (12) **characterized in that** the stake holder (13) is supported so as to be telescopically slidable within a guiding rail (14), which on the one hand is connected to the cross-beam (10) and, on the other hand, can be connected to an outer frame (30) of the commercial vehicle.

2. The device according to claim 1,
**characterized in that**
the guiding rail (14) is arranged lateral and in the longitudinal direction of the cross-beam (10).

3. The device according to claim 1 or 2,
**characterized in that**
the stake holder (13) comprises a guiding element (13a) supported horizontally within the guiding rail (13a) and a vertically arranged receiving element (13b) comprising an opening for the form-fit receiving of the stake (12).

4. The device according to claim 3,
**characterized in that**
the guiding element (13a) of the stake holder (13) comprises at least one bore (16) engaged by at least one spring catch (17a) of the guiding rail (14) in the mounted state.

5. The device according to at least one of claims 1 to 4,
**characterized in that**
the receiving element (13b) of the stake holder (13) comprises retention means (18) for receiving lashing means, in particular ropes, belts and/or chains.

6. The device according to at least one of claims 1 to 5,
**characterized in that**
the stake (10) comprises a spring-biased locking mechanism (41) locking with the receiving element (13b) for releasably fixing the stake (12).

7. The device according to at least one of claims 1 to 6,
**characterized in that**
the guiding rail (14) comprises a hat profile at least in sections.

8. The device according to claim 7,
**characterized in that**
a flank (19a, 19b) of the hat profile overlaps the cross-beam (10).

9. The device according to claim 8,
**characterized in that**
the flank (19a, 19b) of the guiding rail (14) comprises bores (21) for fixing load securing means, in particular securing wedges.

10. The device according to at least one of claims 1 to 9,
**characterized in that**
the guiding rail (14) comprises a cover (20) at an axially inner end (14a) forming a stop for the stake holder (13).

11. The device according to at least one of claims 1 to 10,
**characterized in that**
a flange (22) is associated with the guiding rail (14) at an axially outer end (14b) which can be connected to the outer frame (30).

12. The device according to claim 11,
**characterized in that**
the guiding rail (14) can be connected to the flange (22), in particular hooked into the flange (22).

13. The device according to claim 11 or 12,
**characterized in that**
the flange (22) comprises retention means (23) for receiving lashing means, in particular ropes, belts and/or chains.

14. A method for securing load on a commercial vehicle with at least one cross-beam (10) arranged at a right angle to the longitudinal vehicle axis and at least one stake (12) which is arranged at an axial end (10a, 10b) of the cross-beam (10) and essentially perpendicular to same, wherein a guiding rail (14) is connected on the one hand to the cross-beam (10) and on the other hand to an outer frame (30), and the stake holder (13) is telescopically slided within the guiding rail (14) for the form-fit adapting of the stakes (12) to the load.

15. A commercial vehicle having a device for securing load according to at least one of claims 1 to 13.

## Revendications

1. Dispositif pour sécuriser le chargement d'un véhicule utilitaire, avec au moins une traverse (10) agencée perpendiculairement à l'axe longitudinal du véhicule et au moins un montant (12), qui est agencé à une extrémité axiale (10a,10b) de la traverse (10) et sensiblement perpendiculairement à celle-ci, dans lequel, pour recevoir le montant (12), il est prévu un support de montant (13) **caractérisé en ce que**
le support de montant (13) est monté à coulissement télescopique dans un rail de guidage (14) qui est raccordé, d'une part, à la traverse (10) et peut être raccordé, d'autre part, à un cadre externe (30) du véhicule utilitaire.

2. Dispositif selon la revendication 1,
**caractérisé en ce que**
le rail de guidage (14) est agencé latéralement et dans la direction longitudinale de la traverse (10).

3. Dispositif selon la revendication 1 ou 2,
**caractérisé en ce que**
le support de montant (13) comprend un élément de guidage (13a) agencé horizontalement monté dans le rail de guidage (14) et un élément de réception (13b) agencé verticalement, qui présente une ouverture pour la réception par adaptation de forme du montant (12).

4. Dispositif selon la revendication 3,
**caractérisé en ce que**
l'élément de guidage (13a) du support de montant (13) présente au moins un perçage (16), dans lequel s'engage à l'état monté au moins un verrou à ressort (17a) du rail de guidage (14).

5. Dispositif selon au moins l'une quelconque des revendications 1 à 4, **caractérisé en ce que**
l'élément de réception (13b) du support de montant (13) présente des moyens de retenue (18) pour recevoir des moyens d'arrimage, en particulier des câbles, des sangles et/ou des chaînes.

6. Dispositif selon au moins l'une quelconque des revendications 1 à 5, **caractérisé en ce que**
le montant (10) présente un mécanisme d'arrêt (41) sollicité par une force élastique qui s'enclenche sur l'élément de réception (13b) pour fixer de manière amovible le montant (12).

7. Dispositif selon au moins l'une quelconque des revendications 1 à 6, **caractérisé en ce que**
le rail de guidage (14) comprend au moins par sections un profilé chapeau.

8. Dispositif selon la revendication 7,
**caractérisé en ce que**
un flanc (19a, 19b) du profilé chapeau recouvre la traverse (10).

9. Dispositif selon la revendication 8,
**caractérisé en ce que**
le flanc (19a, 19b) du rail de guidage (14) comprend des perçages (21) pour fixer des moyens de sécurisation de chargement, en particulier des cales de sécurité.

10. Dispositif selon au moins l'une quelconque des revendications 1 à 9, **caractérisé en ce que**
le rail de guidage (14) présente, à une extrémité axialement interne (14a), un recouvrement (20) qui forme une butée pour le support de montant (13).

11. Dispositif selon au moins l'une quelconque des revendications 1 à 10, **caractérisé en ce que**
l'on affecte au rail de guidage (14), à une extrémité axialement externe (14b), une aile (22) qui peut être raccordée au cadre externe (30).

12. Dispositif selon la revendication 11,
**caractérisé en ce que**
le rail de guidage (14) peut être raccordé à l'aile (22), en particulier être accrochée à l'aile (22).

13. Dispositif selon la revendication 11 ou 12,
**caractérisé en ce que**
l'aile (22) présente des moyens de retenue (23) pour recevoir des moyens d'arrimage, en particulier des câbles, des sangles et/ou des chaînes.

14. Procédé pour sécuriser un chargement sur un véhicule utilitaire avec au moins une traverse (10) agencée perpendiculairement à l'axe longitudinal du véhicule et au moins un montant (12) qui est agencé à une extrémité axiale (10a, 10b) de la traverse (10) et sensiblement perpendiculairement à celle-ci, dans lequel un rail de guidage (14) est raccordé, d'une part, à la traverse (10) et, d'autre part, au cadre externe (30) et on fait coulisser le support de montant (13) en mode télescopique dans le rail de guidage (14) pour adapter le montant (12) au chargement par adaptation de forme.

15. Véhicule utilitaire avec un dispositif de sécurisation de chargement selon au moins l'une quelconque des revendications 1 à 13.
